# EUROPÄISCHE PATENTSCHRIFT

(11) **EP 1 101 265 B1**
(45) Veröffentlichungstag und Bekanntmachung des Hinweises auf die Patenterteilung: **30.10.2002**
(21) Anmeldenummer: 99945861.5
(22) Anmeldetag: 01.07.1999
(51) Int. Cl.: H02H 9/00

(54) **SCHALTUNGSANORDNUNG ZUR EINSCHALTSTROMBEGRENZUNG EINER KAPAZITIVEN LAST**
CIRCUIT FOR LIMITING THE INRUSH CURRENT OF A CAPACITIVE LOAD
CIRCUIT POUR LA LIMITATION D'UN COURANT D'APPEL D'UNE CHARGE CAPACITIVE

(30) Priorität: 24.07.1998 DE 19833452
(43) Veröffentlichungstag der Anmeldung: 23.05.2001
(73) Patentinhaber: SIEMENS AKTIENGESELLSCHAFT, 80333 München (DE)
(72) Erfinder: HOFFMANN, Klaus, D-83646 Bad Tölz (DE); GOLLER, Hugo, D-80797 München (DE)
(86) Internationale Anmeldenummer: DE9902005
(87) Internationale Veröffentlichungsnummer: WO00007272

(56) Entgegenhaltungen:
- EP-A- 0 477 367
- GB-A- 2 300 982

## Beschreibung

Die Erfindung bezieht sich auf eine Schaltungsanordnung zur Einschaltstrombegrenzung einer kapazitiven Last, die mit einer Betriebsspannung betrieben wird.

Beim Einschalten einer kapazitiven Last, wie beispielsweise von Servoendstufen zum Treiben von X-Y-Motoren, lädt sich die kapazitive Last schlagartig auf. Bei Stützkondensatoren (bis zu 18000 µF) der Endstufen können dabei Stromspitzen bis zu 200 A auftreten, die die Kontakte von im Stromkreis zur Sicherheit zwischengeschalteten Schützen festschweißen. Damit sind diese Schütze nicht mehr funktionsfähig.

Aus der GB 2300982 A ist zum Begrenzen des Einschaltstromes einer kapazitiven Last ein in Reihe mit der kapazitiven Last geschalteter Heißleiter bekannt. Ferner ist hieraus bekannt zur Einschaltstrombegrenzung einen in Reihe zur kapazitiven Last geschalteten Festwiderstand zu verwenden, welcher mittels eines zeitgesteuerten Schalters überbrückt werden kann. Ferner lehrt die GB 2300982 A einen Kaltleiter in Reihe zur kapazitiven Last zu schalten und jenen mittels eines Schalters spannungsabhängig zu überbrücken. Aus der EP 477367 Al ist bekannt, auf ein Ansteigen einer Versorgungsspannung, welches auf ein vorheriges Abfallen der-Versorgungsspannung folgt, eine kapazitive Last über ein Relais sowie in Reihe zu dem Relais geschaltete strombegrenzende Widerstände solange an die Versorgungsspannung anzulegen, bis die Spannung einer kapazitiven Last gestiegen ist, woraufhin von einem Prozessor die Versorgungsspannung direkt an die kapazitive Last angelegt wird.

Es ist die Aufgabe der Erfindung eine Schaltungsanordnung zur Einschaltstrombegrenzung einer kapazitiven Last anzugeben, die die während des Einschaltvorgangs fließenden Ströme reduziert.

Die Aufgabe wird erfindungsgemäß durch eine Schaltungsanordnung mit den Merkmalen des Patentanspruchs 1 gelöst.

Dabei werden zwei Schalter, die zu unterschiedlichen Zeitpunkten schalten, benutzt. Der erste Schalter schaltet den Strom über einen Heißleiter, der zwischen Betriebsspannung und kapazitiver Last geschaltet ist. Dadurch wird der Einschaltstrom begrenzt und erhöht sich in seinem zeitlichen Verlauf durch Eigenerwärmung des Heißleiters. Der zweite Schalter schaltet nach einer Verzögerungszeit relativ zum ersten Schalter und bewirkt damit, daß der Heißleiter überbrückt wird und die Betriebsspannung der kapazitiven Last zur Verfügung steht, wobei die Verzögerungszeit durch einen weiteren Heißleiter bewirkt wird, der im Versorgungsstromkreis des zweiten Schalters angeordnet ist.

Zum Vermeiden eines Stromstoßes beim Einschalten nachdem die Heißleiter noch erwärmt sind, ist in vorteilhafter gemäß Anspruch 2 vorgesehen, daß der erste und der zweite Schalter als gemeinsam schaltendes Relais ausgebildet sind, dessen Versorgungsspannung erst geschaltet wird, wenn der weitere Heißleiter und damit auch die anderen Heißleiter abgekühlt sind.

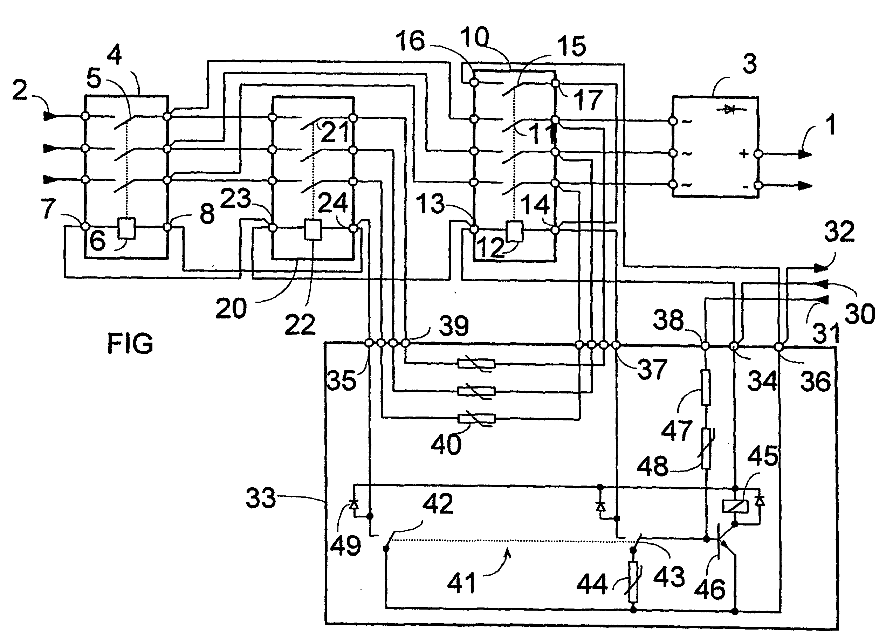

Anhand der einzigen Figur der Zeichnung wird die Erfindung in einem Ausführungsbeispiel näher erläutert.

Dabei zeigt die Figur eine Schaltungsanordnung zur Einschaltstrombegrenzung einer kapazitiven Last.

Gemäß der Figur wird eine kapazitive Last 1 an eine Betriebsspannung 2 über einen Gleichrichter 3 sowie eine Schaltung von Schützen 4, 10, 20 angeschlossen. Dabei sind die Eingänge des ersten Schützes 4 mit der Betriebsspannung 2 verbunden.

Bei einer Drehstromversorgung handelt es sich um drei Eingänge, für die jeweils gleiche Stromläufe gelten. Im folgenden wird ein Stromlauf geschildert, die anderen beiden Stromläufe sind entsprechend geschaltet. Der erste Schütz 4 ist mit Schaltern 5 ausgestattet, die von einer Erregereinrichtung 6 geschaltet werden, wenn eine Erregerspannnung am Erregereingang 7 und am Erregerausgang 8 anliegt. Die Eingänge des ersten Schützes 4 sind mit den Ausgängen des ersten Schützes 4 über die Schalter 5 verbunden. Der Ausgang des ersten Schützes 4 ist mit einem Teil der Eingänge eines zweiten Schützes 10 verbunden, der mit Schaltern 11 und einem weiteren Schalter 15 ausgestattet ist. Die Schalter 11 und der weitere Schalter 15 werden durch eine Erregereinrichtung 12 des zweiten Schützes 10 geschaltet, wenn eine Erregerspannung am Erregereingang 13 und am Erregerausgang 14 des zweiten Schützes 10 anliegt. Die Ausgänge des zweiten Schützes sind mit den Eingängen des Gleichrichters 3 verbunden, der die anliegende Drehspannung gleichrichtet und an die kapazitive Last 1, beispielsweise die Servoendstufe von X-Y-Moteren anlegt.

Parallel zum zweiten Schütz 10 ist zwischen dem Ausgang des ersten Schützes 4 und dem Gleichrichter 3 eine Serienschaltung aus einem dritten Schütz 20 und Heißleitern 40 geschaltet. Die Heißleiter 40 weisen ein temperaturabhängiges Widerstandsverhalten auf, wobei der Widerstand mit steigender Temperatur abnimmt (NTC: negative temperature coefficient). Dazu sind die Ausgänge des ersten Schützes 4 mit den Eingängen des dritten Schützes 20 verbunden, und die Eingänge des dritten Schützes 20 sind über Schalter 21 mit den Ausgängen des dritten Schützes 20 verbunden. Die Schalter 21 werden von einer Erregervorrichtung 22 im dritten Schütz 20 geschaltet, wenn eine Erregerspannung am Erregereingang 23 und am Erregerausgang 24 anliegt.

Die Heißleiter 40 sind in einem Einschaltstrombegrenzer 33 angeordnet und sind über Anschlüsse 39 mit dem Ausgang des dritten Schützes 20 und den Ausgängen des zweiten Schützes 10 verbunden.

Zur Steuerung der Schütze 4, 10, 20 dienen zwei Steuerspannungen 30, 31, die beispielsweise beide 24 V Gleichspannung gegenüber der Masse 32 betragen. Die Anschluß der ersten Steuerspannung 30 ist mit den Erregereingängen 7, 13, 23 des ersten 4, zweiten 10 und dritten 20 Schützes sowie mit einem ersten Anschluß 34 des Einschaltstrombegrenzers 33 verbunden. Die Erregerausgänge 8, 24 des ersten 4 und dritten 20 Schützes sind mit einem zweiten Anschluß 35 des Einschaltstrombegrenzers 33 verbunden. Der zweite Anschluß 35 des Einschaltstrombegrenzers 33 liegt über einen ersten Schalter 42 eines Relais 41 an einem dritten Anschluß 36 des Einschaltstrombegrenzers 33, der an der Masseleitung 32 angeschlossen ist.

Der Erregerausgang 14 des zweiten Schützes 10 liegt an einem vierten Anschluß 37 des Einschaltstrombegrenzers 33. Dieser vierte Anschluß 37 ist über einen zweiten Schalter 43 des Relais 41 und über einen dazu in Serie geschalteten weiteren Heißleiter 44 mit dem dritten Anschluß 36 des Einschaltstrombegrenzers 33 verbunden.

Der Erregerausgang 14 des zweiten Schützes 10 ist darüber hinaus mit einem weiterem Ausgang 17 des zweiten Schützes 10 verbunden, wobei der weitere Ausgang 17 über den weiteren Schalter 15, mit einem weiteren Eingang 16 des zweiten Schützes 10 und dieser mit der Masse 32 verbunden ist.

Der Anschluß der zweiten Steuerspannung 31 ist mit einem fünften Anschluß 38 des Einschaltstrombegrenzers verbunden, der über einen Widerstand 47 und einen zusätzlichen Heißleiter 48 an der Basis eines npn-Transistors 46 angeschlossen ist. Der Emitter des npn-Transistors 46 liegt über den dritten Anschluß 36 an der Masse 32, während der Kollektor des Transistors 46 über eine Sicherung 45 am ersten Anschluß 34 des Einschaltstrombegrenzers 33 liegt.

Der zweite Anschluß 35, der vierte Anschluß 37 und der Kollektor des Transistors 46 sind jeweils über Löschdioden 49 mit dem erste Anschluß 34 verbunden.

Die Funktion der Schaltungsanordnung ist folgendermaßen: Die erste Steuerspannung 30 dient als Versorgungsspannung des Relais 41, die zweite Steuerspannung 31 dient als Steuerspannung des Relais 41. Fehlt eine der Spannungen 30,31 , wird das Relais 41 nicht erregt und die kapazitive Last 1 wird nicht an die Betriebsspannung 2 angeschaltet. Schaltet das Relais 41, schalten gleichzeitig auch das erste Schütz 4 und das dritte Schütz 20. Strom kann, begrenzt durch die Heißleiter 40 über den Gleichrichter 3 in den Lastkreis 1 fließen. Dieser begrenzte Einschaltstrom erhöht sich in seinem zeitlichen Verlauf durch Eigenerwärmung der Heißleiter 40. Damit erfolgt die Aufladung der kapazitiven Last 1 lawinenartig. Der Ladestrom nimmt mit zunehmender Aufladung wieder ab. Da bereits mit dem Anschalten Betriebsstrom fließt, fällt eine gewisse Spannung an den Heißleitern 40 ab. Je niederohmiger der Heißleiter 40 ist, um so geringer ist der Spannungsabfall. Überbrückt jetzt der zweite Schütz 10 die Heißleiter 40, hält sich die Stromspitze, verursacht durch die Restaufladung der kapazitiven Last 1 in unschädlichen Grenzen.

Das Relais 41 schließt gleichzeitig mit den Erregerstromkreisen des ersten 4 und des dritten Schützes 20 auch den Erregerstromkreis des zweiten Schützes 10. Der Stromfluß durch diesen Kreis erwärmt den weiteren Heißleiter 44. Der weitere Heißleiter 44 wird niederohmiger, der Spannungsabfall am weiteren Heißleiter 44 sinkt und die Erregerspannung steigt. Wird die Schaltschwelle des zweiten Schützes 10 überschritten, überbrückt der zweite Schütz 10 die Heißleiter 40. Die elektrische Energie steht ohne Einschränkung der kapazitiven Last 1 zur Verfügung.

Eine Selbsthalteschaltung über den weiteren Schalter 15 hält den zweiten Schütz 10 im eingeschalteten Zustand. Jetzt kühlen alle Heißleiter 40, 44 gleichmäßig ab, so daß nach dem Abschalten des ersten 4, zweiten 10 und dritten 20 Schützes eine Wiedereinschalten mit Verzögerung möglich ist. Ist jedoch die Abkühlzeit zu kurz, so daß der Einschaltstromstoß bei Wiedereinschalten zu groß werden könnte, verhindert der umgebungs-temperatur-kompensierte Basisspannungsteiler am npn-Transistor 46 über den zusätzlichen Heißleiter 48 das Schalten des Relais 41 so lange, bis in Folge der Abkühlung des weiteren Heißleiters 44 der Schwellwert der Basisspannung überschritten wird. Erst dann schaltet das Relais 41, schalten der erste 4 und der dritte Schütz 20 und verzögert der zweite Schütz 10.

## Patentansprüche

1. Schaltungsanordnung zur Einschaltstrombegrenzung einer kapazitiven Last (z.B. 1) die mit einer Betriebsspannung (2) betrieben wird,
mit einem Leistungsschalter (10), an dessen Betriebseingänge die Betriebsspannung (2) angelegt ist, und dessen Betriebsausgänge mit der kapazitiven Last (1) verbunden sind, mit einem Ladeschalter (20), an dessen Betriebseingänge die Betriebsspannung (2) angelegt ist,
mit strombegrenzenden Widerständen (40), die jeweils zwischen den Betriebsausgängen des Ladeschalters (20) und der kapazitiven Last (z.B. 1 geschaltet sind,
mit einem ersten Schalter (42), der den Ladeschalter (20) schließt,
und mit einem zweiten Schalter (43), der den Leistungsschalter (10) nach einer Verzögerungszeit gegenüber dem Schließen des Ladeschalters (20) schließt,
**dadurch gekennzeichnet,**
**daß** die strombegrenzenden Widerstände (40) Heißleiter sind, und
**daß** die Verzögerungszeit durch das Erwärmen eines im Erregerstromkreis des Leistungsschalters (10) angeordneten weiteren Heißleiters (44) und Überschreiten der Schaltschwelle des Leistungsschalters (10) erzeugt wird.

2. Schaltungsanordnung nach Anspruch 1,
**dadurch gekennzeichnet,**
**daß** der erste (42) und der zweite Schalter (43) als ein gemeinsam schaltendes Relais (41) ausgebildet sind, wobei das Relais (41) seine Versorgungsspannung aus einem umgebungstemperaturkompensierten Spannungsteiler eines Transistors (46) bezieht, so daß das Relais (43) erst geschaltet wird, wenn der weitere Heißleiter (44) abgekühlt ist.

3. Schaltungsanordnung nach Anspruch 1 oder 2,
• wobei dem Ladeschalter (20) ein Schütz (4)vorgeschaltet ist, an dessen Betriebseingänge die Betriebsspannung (2) angelegt ist, und
• wobei der Ladeschalter (20) und der Schütz (4) mittels des ersten Schalters (42) schließbar sind, und
• wobei die Betriebseingänge des Leistungsschalters (10) zumindest teilweise mit den Betriebsausgängen des Schützes (4) verbunden sind.

## Claims

1. Circuit arrangement for limiting the switch-on current of a capacitive load (for example 1) which is operated with an operating current (2),
having a power switch (10) to whose operating inputs the operating voltage (2) is applied and whose operating outputs are connected to the capactive load (1),
having a load switch (20) to whose operating inputs the operating voltage (2) is applied,
having current-limiting resistors (40) which are each connected between the operating outputs of the load switch (20) and the capacitive load (for example 1),
having a first switch (42) which closes the load switch (20),
and having a second switch (43) which closes the power switch (10) after a delay time after the closing of the load switch (20),
**characterized**
**in that** the current-limiting resistors (40) are NTC thermistors, and
**in that** the delay time is generated by the warming up of a further NTC thermistor (44) which is arranged in the energizing-current circuit of the power switch (10), and by the upward transgression of the switching threshold of the power switch (10).

2. Circuit arrangement according to Claim 1,
**characterized in that** the first switch (42) and the second switch (43) are embodied as a jointly switching relay (41), the relay (41) drawing its supply voltage from an ambient-temperature-compensated voltage divider of a transistor (46) with the result that the relay (43) does not switch until the further NTC thermistor (44) has cooled down.

3. Circuit arrangement according to Claim 1 or 2,
• a contactor (4) to whose operating inputs the operating voltage (2) is applied being connected upstream of the load switch (20), and
• it being possible to close the load switch (20) and the contactor (4) by means of the first switch (42), and
• the operating inputs of the power switch (10) being at least partially connected to the operating outputs of the contactor (4).

## Revendications

1. Circuit destiné à la limitation du courant de mise en circuit d'une charge capacitive (par exemple, 1) qui est exploitée sous une tension de service (2), comportant
un sectionneur de puissance (10), aux sorties de service duquel est appliquée la tension de service (2) et dont les sorties de service sont reliées à la charge capacitive (1),
un interrupteur de charge (20), aux sorties de service duquel est appliquée la tension de service (2),
des résistances (40) limitant le courant, qui sont chacune connectées entre les sorties de service de l'interrupteur de charge (20) et la charge capacitive (par exemple, 1),
un premier contact (42), qui ferme l'interrupteur de charge (20),
et un deuxième contact (43), qui ferme le sectionneur de puissance (10) après une temporisation par rapport à la fermeture de l'interrupteur de charge (20)
**caractérisé par le fait**
**que** les résistances (40) limitant le courant sont des thermistances et
**que** la temporisation est créée par l'échauffement d'une autre thermistance (44) montée dans le circuit du courant d'excitation du sectionneur de puissance (10) et le dépassement du seuil de commutation du sectionneur de puissance (10).

2. Circuit selon la revendication 1
**caractérisé par le fait**
**que** le premier contact (42) et le deuxième contact (43) sont conçus sous la forme d'un relais (41), qui commute simultanément, le relais (41) recevant sa tension d'alimentation d'un diviseur de tension, compensé par la température ambiante, d'un transistor (46) si bien que le relais (43) n'est commuté que lorsque l'autre thermistance (44) est refroidie.

3. Circuit selon la revendication 1 ou 2
• un disjoncteur (4), aux entrées de service duquel est appliquée la tension de service (2), étant monté en amont de l'interrupteur de charge (20) et
• l'interrupteur de charge (20) et le disjoncteur (4) pouvant être fermés au moyen du premier contact (42) et
• les entrées de service du sectionneur de puissance (10) étant reliées, au moins en partie, aux sorties de service du disjoncteur (4).
